(19) **Europäisches Patentamt / European Patent Office / Office européen des brevets**

(11) **EP 4 644 031 A1**

(12) **EUROPEAN PATENT APPLICATION**
published in accordance with Art. 153(4) EPC

(43) Date of publication:
**05.11.2025   Bulletin 2025/45**

(21) Application number: **24792359.2**

(22) Date of filing: **21.02.2024**

(51) International Patent Classification (IPC):
**B23K 20/12** (2006.01)

(52) Cooperative Patent Classification (CPC):
**B23K 20/12**

(86) International application number:
**PCT/JP2024/006355**

(87) International publication number:
**WO 2024/219083 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.04.2023   JP 2023067979**

(71) Applicant: **JFE Steel Corporation**
**Tokyo 100-0011 (JP)**

(72) Inventors:
- **MATSUSHITA Muneo**
  **Tokyo 100-0011 (JP)**
- **TOMITA Kai**
  **Tokyo 100-0011 (JP)**
- **TANIGUCHI Koichi**
  **Tokyo 100-0011 (JP)**

(74) Representative: **Grünecker Patent- und Rechtsanwälte**
**PartG mbB**
**Leopoldstraße 4**
**80802 München (DE)**

(54) **ROTATING TOOL FOR DOUBLE-SIDED FRICTION STIR WELDING**

(57)   Provided is a rotating tool for double-sided friction stir welding that can simultaneously achieve suppression of defect formation during joining, increased joining speed, and improved rotating tool durability. A leading end of the rotating tool consists of a material having a coefficient of kinetic friction of less than 0.30 and a Vickers hardness of 2500 HV or more.

*FIG. 5A*

Rotation direction

**Description**

TECHNICAL FIELD

The present disclosure relates to a rotating tool for double-sided friction stir welding.

BACKGROUND

As a technique related to friction welding, for example, Patent Literature (PTL) 1 discloses: "A method of friction welding a pair of workpieces (45, 46), the method comprising causing relative motion between the workpieces while urging the workpieces together; sensing the rate of relative motion at least towards the end of the weld cycle; and urging the workpieces together under a force which is controlled in response to the sensed rate of relative rotation between the workpieces."

However, the friction welding in PTL 1 requires rotating the parts (workpieces) which are the materials to be joined (i.e. welded), such as metal sheets. The shapes and dimensions of the materials to be joined, such as metal sheets, are thus limited.

As a technique related to friction stir welding, for example, PTL 2 discloses: "A method of operating on a workpiece, the method comprising offering a probe of material harder than the workpiece material to a continuous or substantially continuous surface of the workpiece; causing relative cyclic movement between the probe and the workpiece while urging use probe and workpiece together whereby frictional heat is generated as the probe enters the workpiece so as to create a plasticised region in the workpiece material around the probe; stopping the relative cyclic movement; and allowing the plasticised material to solidify around the probe."

In the present disclosure, a region where the materials to be joined are butted or overlapped and remain unjoined is referred to as "unjoined portion," and a region where the materials to be joined are joined and integrated is referred to as "joined portion."

As mentioned above, friction welding as in PTL 1 is a method in which parts such as metal sheets as the materials to be joined are rotated and welded using frictional heat generated between the parts. On the other hand, friction stir welding as in PTL 2 is a method in which metal sheets or the like as the materials to be joined are fixed in place and joined by rotating and moving a rotating tool. Accordingly, friction stir welding has the advantage of being able to continuously perform solid-state joining even when the materials to be joined are substantially infinitely long in the joining direction. Moreover, friction stir welding enables joining without melting the unjoined portion because it is a solid-state joining method that utilizes the material flow of metal caused by the frictional heat between the rotating tool and the materials to be joined. Friction stir welding further has many advantages, such as less deformation after joining because of low heating temperature, fewer defects in the joined portion because the materials to be joined are not melted, and no need for filler material.

CITATION LIST

Patent Literature

PTL 1: JP S62-183979 A
PTL 2: JP H07-505090 A
PTL 3: JP 3261433 B2
PTL 4: JP 4838385 B2
PTL 5: JP 4838388 B2
PTL 6: JP 6825630 B2
PTL 7: JP 6737347 B2
PTL 8: JP 4827359 B2
PTL 9: JP 2007-237258 A
PTL 10: JP 5971616 B2
PTL 11: JP 6491363 B2
PTL 12: JP 5156948 B2
PTL 13: WO 2018/030309 A1
PTL 14: JP 5185103 B2
PTL 15: JP 2015-127063 A
PTL 16: JP 2003-181655 A

PTL 17: JP 2003-290936 A
PTL 18: JP 2004-195480 A
PTL 19: JP 2011-115846 A

SUMMARY

(Technical Problem)

Friction stir welding described above has seen increasing use in the fields of aircraft, ships, railway vehicles, automobiles, etc. as a joining method for low-melting-point metal materials such as aluminum alloys and magnesium alloys. This is due to the following reason. For joining of low-melting-point metal materials, it is difficult to obtain satisfactory properties of joined portions using conventional arc welding methods. The application of friction stir welding improves productivity and enables obtaining high-quality joined portions.

In recent years, the application of friction stir welding to structural steel, which is mainly used as material for structures such as buildings, ships, heavy machinery, pipelines, and automobiles, has also been under consideration. In this way, solidification cracking and hydrogen cracking, which are issues associated with conventional fusion welding, can be avoided, and also microstructural changes of steel materials can be suppressed. This can contribute to improved joint performance. Moreover, stirring the joining interface with the rotating tool can create clean surfaces that come into contact with each other. Hence, preparatory processes such as those required for diffusion bonding are unnecessary. Thus, the application of friction stir welding to structural steel is expected to provide many advantages.

However, in the case of friction stir welding of structural steel, issues remain regarding joining workability, such as the suppression of defect formation during joining and the increase of the joining speed. As a result, the use of friction stir welding for structural steel has not yet become as widespread as that for low-melting-point metal materials. Examples of defects that can occur during joining include imperfect shape and joining failure on the joint surface or inside the joint.

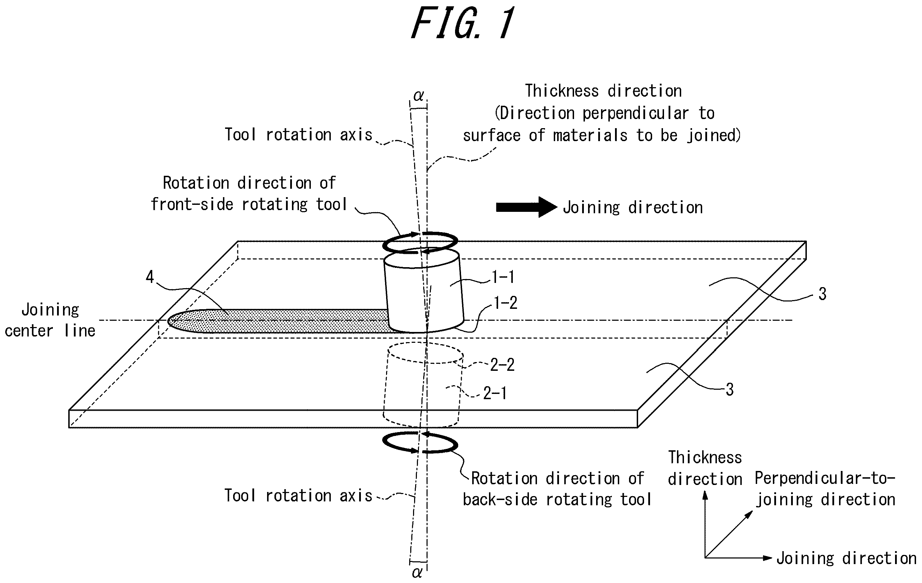

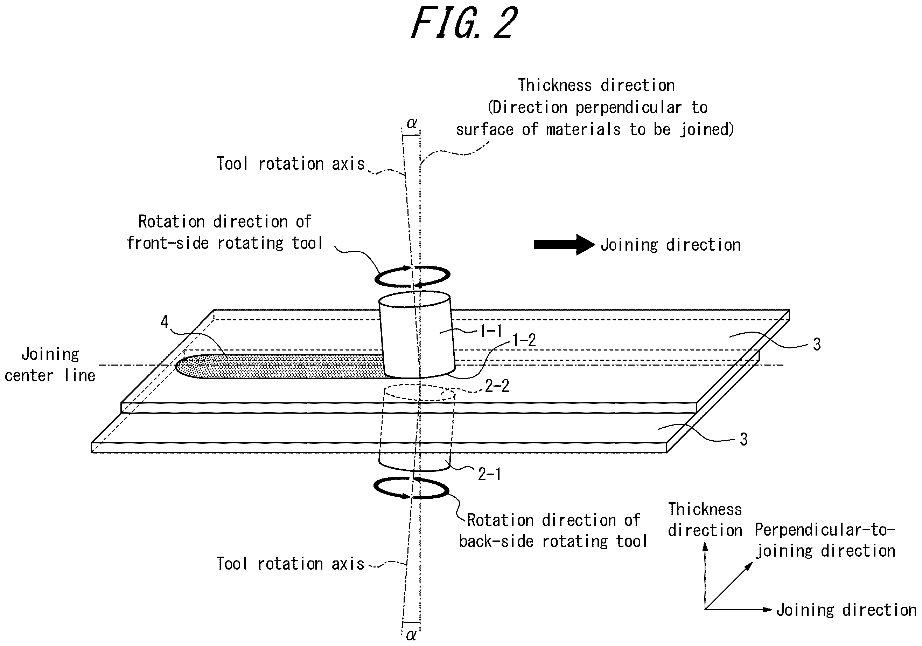

To solve these problems, the application of double-sided friction stir welding to structural steel as disclosed in, for example, PTL 3 to PTL 7 has been under consideration. In double-sided friction stir welding, a pair of rotating tools facing each other press one side and the other side of the unjoined portion of the materials to be joined, as illustrated in FIGS. 1 and 2. This enables homogeneous and sufficient material flow in the thickness direction of the materials to be joined. As a result, it is expected that defect formation during joining can be suppressed and the joining speed can be increased.

For widespread use of friction stir welding for structural steel, improving the durability of the rotating tool is also necessary. If the rotating tool lacks sufficient durability, the rotating tool may be damaged or worn, leading to the need for repair and a high likelihood of joining failure. Thus, unless the rotating tool has sufficient durability, practical application of friction stir welding to structural steel would be deemed difficult despite the foregoing advantages.

PTL 8 to PTL 13 disclose rotating tools made from various materials. PTL 14 to PTL 19 disclose rotating tools (hereinafter also referred to as probe-less rotating tools) that do not include a probe (pin) which is susceptible to damage and wear due to the significant load applied during joining

However, the use of the rotating tools disclosed in PTL 8 to PTL 19 in double-sided friction stir welding of structural steel cannot achieve the following simultaneously:

- Suppression of defect formation during joining, especially defects such as the following: When the rotation speed of the rotating tool is increased to increase the joining speed, excessive frictional heat is generated between the rotating tool and the materials to be joined. This causes seizure of the materials to be joined at the leading end of the rotating tool and gouging of the surface of the joined portion.
- Increased joining speed.
- Improved rotating tool durability.

There is thus a need to simultaneously achieve all of the above.

It could therefore be helpful to provide a rotating tool for double-sided friction stir welding that can simultaneously achieve suppression of defect formation during joining, increased joining speed, and improved rotating tool durability.

(Solution to Problem)

Upon careful examination, we discovered that the object stated above can be achieved when the leading end of the rotating tool consists of a material having a coefficient of kinetic friction of less than 0.30 and a Vickers hardness of 2500 HV or more.

The present disclosure is based on this discovery and further studies.

We thus provide:

1. A rotating tool for double-sided friction stir welding, wherein a leading end of the rotating tool consists of a material having a coefficient of kinetic friction of less than 0.30 and a Vickers hardness of 2500 HV or more.

2. The rotating tool for double-sided friction stir welding according to 1., being a probe-less rotating tool, wherein a leading end face of the rotating tool is a flat surface, a convex curved surface, or a concave curved surface.

3. The rotating tool for double-sided friction stir welding according to 2., wherein the leading end face of the rotating tool has a spiral-shaped step portion spiraling opposite to a rotation direction of the rotating tool.

4. The rotating tool for double-sided friction stir welding according to any of 1. to 3., wherein the following relational expression (1) is satisfied:

$$4 \times t \leq D \leq 20 \times t \qquad \ldots (1)$$

where t is a thickness of materials to be joined in mm, and D is a diameter of the leading end of the rotating tool in mm.

(Advantageous Effect)

It is thus possible to obtain a rotating tool for double-sided friction stir welding that can simultaneously achieve suppression of defect formation during joining, increased joining speed, and improved rotating tool durability. The rotating tool for double-sided friction stir welding allows for more advantageous application of double-sided friction stir welding to various materials to be joined such as structural steel, which is extremely advantageous industrially.

BRIEF DESCRIPTION OF THE DRAWINGS

In the accompanying drawings:

FIG. 1 is a perspective side view illustrating an example of butt joining by double-sided friction stir welding;
FIG. 2 is a perspective side view illustrating an example of lap joining by double-sided friction stir welding;
FIG. 3A is a top view illustrating an example of butt joining by double-sided friction stir welding;
FIG. 3B is a sectional view taken along line A-A' in FIG. 3A;
FIG. 4A is a schematic diagram illustrating an example of the shape of a probe-equipped rotating tool;
FIG. 4B is a schematic diagram illustrating an example of the shape of a probe-equipped rotating tool;
FIG. 5A is a schematic diagram illustrating an example of the shape of a probe-less flat-end rotating tool;
FIG. 5B is a schematic diagram illustrating an example of the shape of a probe-less flat-end rotating tool;
FIG. 6A is a schematic diagram illustrating an example of the shape of a probe-less convex-end rotating tool;
FIG. 6B is an schematic diagram illustrating an example of the shape of a probe-less convex-end rotating tool;
FIG. 7A is a schematic diagram illustrating an example of the shape of a probe-less concave-end rotating tool;
FIG. 7B is a schematic diagram illustrating an example of the shape of a probe-less concave-end rotating tool;
FIG. 8A is a schematic diagram illustrating an example of a convex-end rotating tool having a stepped step portion; and
FIG. 8B is a schematic diagram illustrating an example of a convex-end rotating tool having a grooved step portion.

DETAILED DESCRIPTION

The presently disclosed technology will be described by way of the following embodiments.

Rotating tool

[1] A rotating tool according to one embodiment of the present disclosure comprises a leading end consisting of a material having a coefficient of kinetic friction of less than 0.30 and a Vickers hardness of 2500 HV or more.

Material of leading end of rotating tool: material with coefficient of kinetic friction of less than 0.30 and Vickers hardness of 2500 HV or more

Upon conducting various studies in order to simultaneously achieve suppression of defect formation during joining, increased joining speed, and improved rotating tool durability in double-sided friction stir welding, particularly double-sided friction stir welding of structural steel, we discovered the following:

- When the rotation speed of the rotating tool is increased to increase the joining speed in double-sided friction stir welding of structural steel, excessive frictional heat is generated between the rotating tool and the materials to be joined. This causes seizure of the materials to be joined at the leading end of the rotating tool and gouging of the surface of the joined portion, leading to defects.

- This phenomenon occurs because, due to excessive frictional heat, the materials to be joined are rapidly subjected to high temperature and soften, and the softened materials to be joined stick to the leading end of the rotating tool.

- An effective way of preventing this phenomenon is to suppress the generation of rapid frictional heat. For this purpose, it is effective to use a material with a coefficient of kinetic friction of less than 0.30 for the leading end of the rotating tool.
- Moreover, when the rotation speed of the rotating tool is increased to increase the joining speed, a greater load is imposed on the rotating tool. This makes the rotating tool prone to damage or wear. An effective way of preventing this is to use a material with high hardness, specifically a Vickers hardness of 2500 HV or more, for the leading end of the rotating tool.

For these reasons, the leading end of the rotating tool consists of a material having a coefficient of kinetic friction of less than 0.30 and a Vickers hardness of 2500 HV or more.

The coefficient of kinetic friction of the material of the leading end of the rotating tool (hereinafter also simply referred to as "coefficient of kinetic friction") is preferably 0.25 or less. While there is no specific lower limit for the coefficient of kinetic friction, the coefficient of kinetic friction is preferably 0.12 or more, for example.

Here, the coefficient of kinetic friction is measured by the ball-on-disc method in accordance with Japanese Industrial Standards (JIS) R 1613 (2010). The material to be measured (i.e. the same material as the leading end of the rotating tool) is used as a ball (ball specimen), and SKD11 defined in JIS G 4404 (2015) is used as a disc (disc specimen). The temperature when measuring the coefficient of kinetic friction may be room temperature (for example, 25 °C).

The Vickers hardness of the material of the leading end of the rotating tool (hereinafter also simply referred to as "Vickers hardness") is preferably 2700 HV or more, and more preferably 2900 HV or more. While there is no specific upper limit for the Vickers hardness, the Vickers hardness is preferably 5000 HV or less, for example.

Here, the Vickers hardness is measured by the Vickers hardness testing method in accordance with JIS R 1610 (2003). The test force is 19.61 N. The temperature when measuring the Vickers hardness may be room temperature (for example, 25 °C).

An example of the material having a coefficient of kinetic friction of less than 0.30 and a Vickers hardness of 2500 HV or more is polycrystalline cubic boron nitride (PCBN). PCBN can be produced in a high-pressure and high-temperature environment using a mixture of cubic boron nitride (CBN) crystal grains and a binder. The coefficient of kinetic friction and Vickers hardness of PCBN can be adjusted by varying the size and content of CBN crystal grains and the material property of the binder.

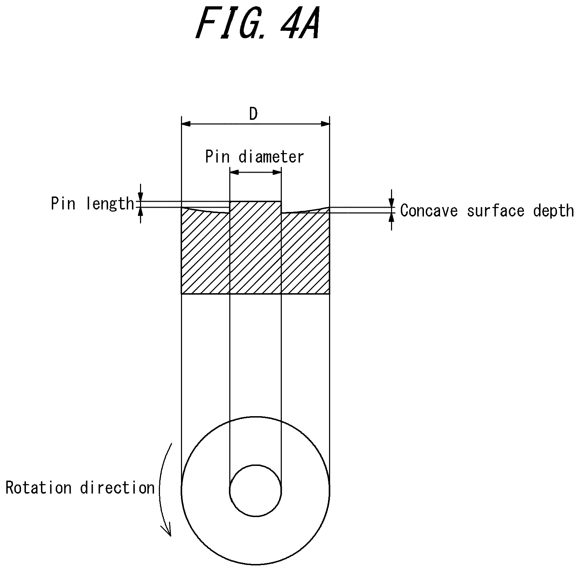

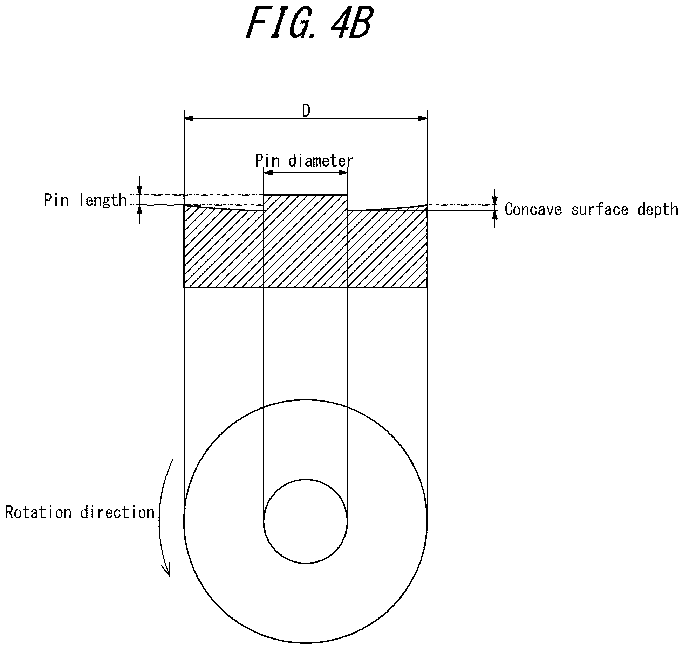

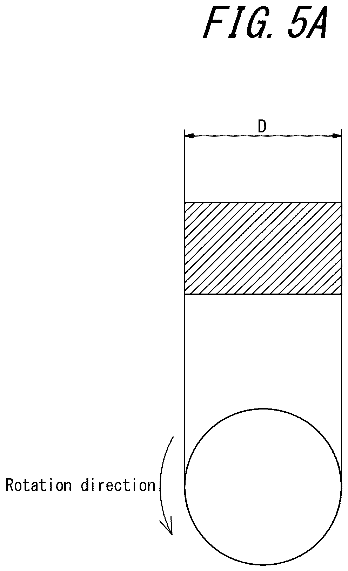

The leading end of the rotating tool is the region that comes into contact with the materials to be joined and their flow portion (softened portion) during joining. For example, in the case of probe-equipped rotating tools as illustrated in FIGS. 4A and 4B, the leading end of the rotating tool has a probe and a shoulder portion. In the case of probe-less rotating tools as illustrated in FIGS. 5A, 5B, 6A, 6B, 7A, and 7B, the leading end of the rotating tool has a shoulder portion. It is preferable that the leading end of the rotating tool includes a region of 0 mm to 5 mm extending from the shoulder portion toward the base portion of the rotating tool opposite to the leading end in the direction of the rotation axis of the rotating tool.

The shoulder portion has a flat shape formed by either a substantially flat surface or a gently curved surface. The shoulder portion has a function of generating frictional heat by contacting the materials to be joined while rotating during joining. The shoulder portion also has a function of preventing material scattering and promoting plastic flow in the rotation direction by pressing the part softened by heat.

The probe has a shape discontinuous from the shoulder portion and protrudes substantially perpendicularly toward the materials to be joined. The probe has a function of improving the stirring capacity in the vicinity of the sheet thickness center by penetrating the softened portion of the materials to be joined toward the sheet thickness center during joining. The probe is usually positioned at the center of the leading end.

The parts of the rotating tool other than the leading end may be made of the same material as the leading end or a different material from the leading end. As the different material from the leading end, for example, a material harder than the materials to be joined is preferable. Specific examples include tungsten carbide (WC) and nickel-based alloys.

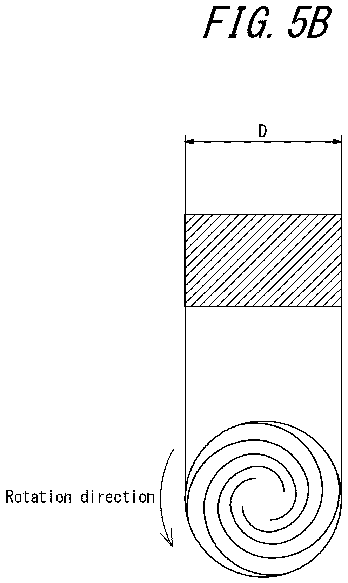

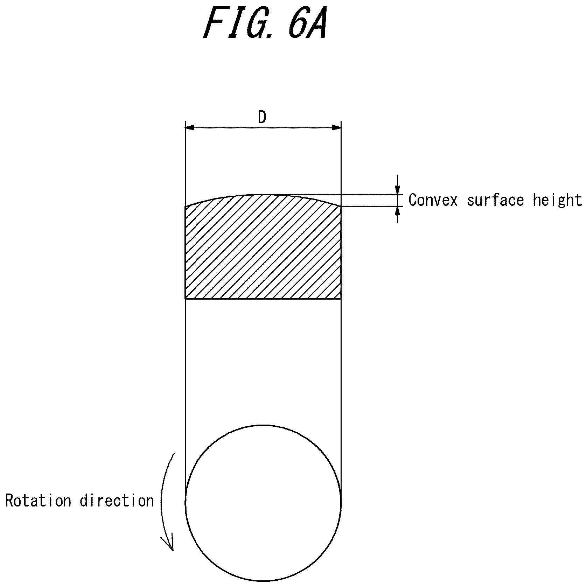

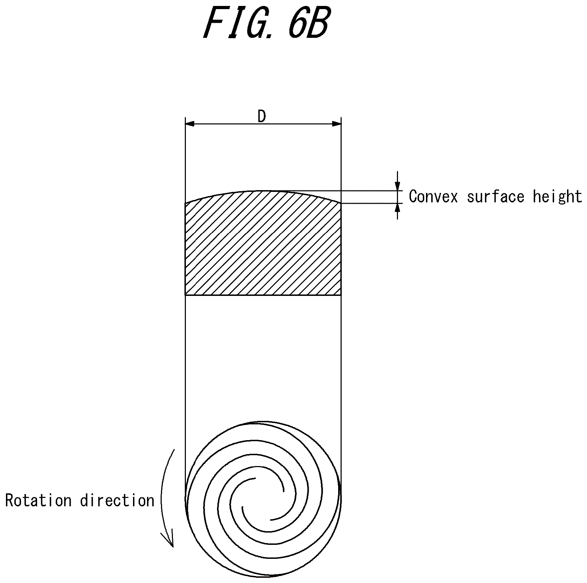

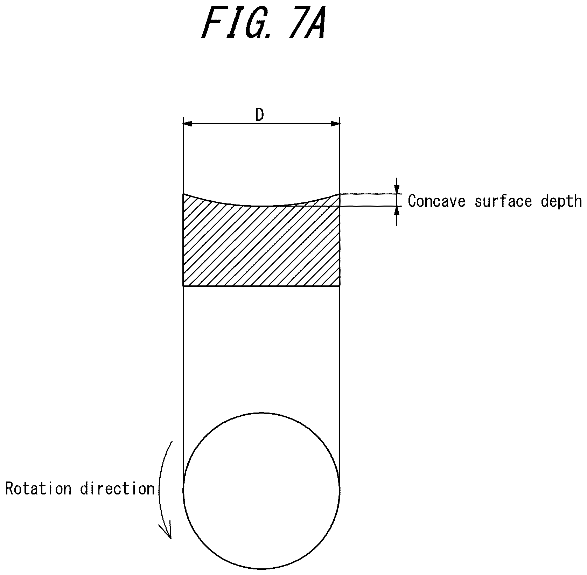

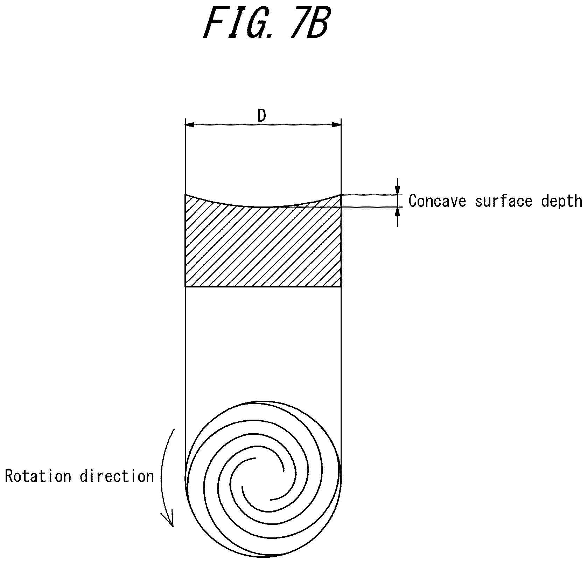

The shape of the rotating tool is not particularly limited. Examples include the above-mentioned probe-equipped rotating tools (FIGS. 4A and 4B) and probe-less rotating tools. Since the probe is located near the thickness center of the materials to be joined during joining, the probe is subjected to higher stress than the shoulder portion and thus is more prone to damage and wear. Hence, probe-less rotating tools are preferable from the viewpoint of tool durability. Preferred examples of probe-less rotating tools include flat-end rotating tools in which a leading end face is a flat surface as in FIGS. 5A and 5B, convex-end rotating tools in which a leading end face is a convex curved surface as in FIGS. 6A and 6B, and concave-end rotating tools in which a leading end face is a concave curved surface as in FIGS. 7A and 7B. In both probe-equipped rotating tools and probe-less rotating tools, the shape of the leading end face in a plane perpendicular to the tool rotation axis (i.e. the projected area of the leading end face of the rotating tool when projected in a direction parallel to the rotation axis) is circular.

From the viewpoint of further promoting material flow, it is preferable that the leading end face of the rotating tool has a spiral-shaped (helical) step portion, especially a spiral-shaped (helical) step portion spiraling opposite to the rotation direction of the rotating tool. The spiral-shaped step portion is defined, for example, by a radial curves (spiral) starting from the center of the leading end face of the rotating tool or the periphery of a central circle of the leading end face of the rotating tool as illustrated in FIGS. 5B, 6B, and 7B, and extending to the outer edge of the leading end face of the rotating tool. (The central circle of the leading end face of the rotating tool is a circle of any diameter centered at the center of the leading end face of the rotating tool.) In FIGS. 5B, 6B, and 7B, the number of spirals is four in each case.

In friction stir welding, when the rotating tool presses and stirs the materials to be joined, frictional heat is generated to soften the metal material forming the materials to be joined and cause it to flow. As a result of a spiral-shaped step portion spiraling opposite to the rotation direction of the rotating tool being provided on the leading end face of the rotating tool, frictional heat is generated from the outer side toward the inner side of the rotating tool. This can prevent the metal material from flowing out of the part pressed by the rotating tool. As a result, plastic flow in the pressed part can be promoted. Moreover, reduction in the thickness of the joined portion relative to the sheet thickness of the base metal can be prevented. In addition, a joined portion surface with reduced burrs can be formed.

The number of spirals defining the step portion is one or more. If the number of spirals defining the step portion is more than six, however, the effect of promoting material flow is insufficient. Additionally, there is a risk that the increased shape complexity leads to damage. Therefore, the number of spirals defining the step portion is preferably six or less.

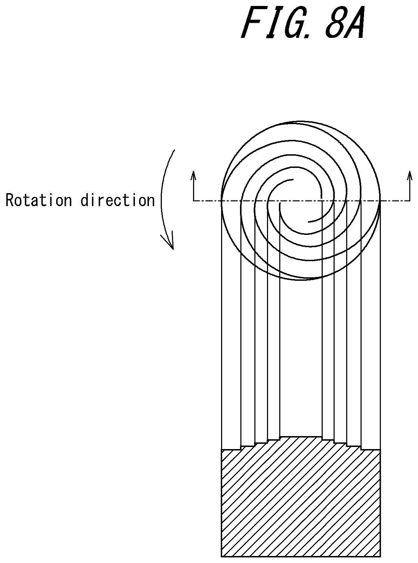

In one example, the step portion is formed by changing the height in a stepped manner (i.e. stair-shaped) for each region between adjacent spirals. For example, in the case where the leading end face of the rotating tool is a convex curved surface, the step portion gradually decreases in height from the periphery of the center portion toward the outer edge (i.e. periphery) of the leading end face of the rotating tool, as illustrated in FIG. 8A. In the case where the leading end face of the rotating tool is a concave curved surface, the step portion gradually increases in height from the periphery of the center portion toward the outer edge (i.e. periphery) of the leading end face of the rotating tool. Such form of the step portion is hereinafter also referred to as "stepped." In a cross section that includes the rotation axis and is parallel to the rotation axis, each step of the step portion may be, for example, substantially horizontal.

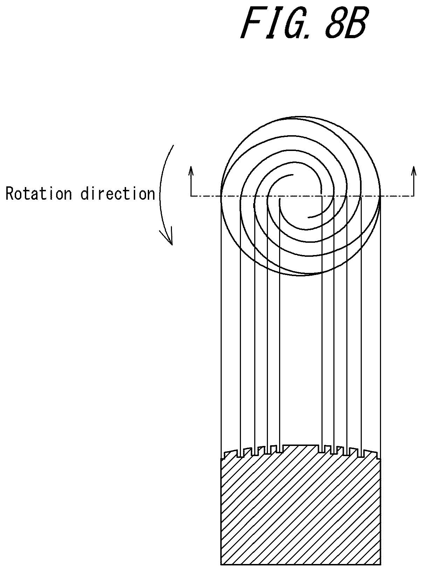

In another example, the step portion is formed by providing recesses (grooves) or projections at the spiral positions, as illustrated in FIG. 8B. Such form of the step portion is hereinafter also referred to as "recessed" or "projected." The recesses (grooves) may have any cross-sectional shape that achieves the foregoing effects, such as U-shaped (including rectangular and semicircular shapes), V-shaped, or L-shaped.

Preferably, the following relational expression (1) is satisfied:

$$4 \times t \leq D \leq 20 \times t \qquad \ldots (1)$$

where t is the thickness of the materials to be joined (mm), and D is the diameter of the leading end of the rotating tool (mm).

If the materials to be joined differ in thickness in butt joining, t is the average value of the thicknesses of the materials to be joined. In lap joining, t is the thickness of the overlap portion of the materials to be joined (i.e. the total thickness of the materials to be joined). D is the diameter of the leading end of the rotating tool in a plane perpendicular to the rotation axis (i.e. the diameter of the projected area of the leading end of the rotating tool when projected in a direction parallel to the rotation axis).

In detail, by appropriately controlling the diameter of the leading end of the rotating tool (hereinafter also referred to as "leading end diameter") depending on the thickness of the materials to be joined, particularly by controlling the leading end diameter so as to satisfy the above expression (1), it is possible to effectively apply, to the materials to be joined, both the temperature increase caused by the frictional heat generated between the rotating tool and the materials to be joined and the shear stress caused by the frictional force. If D is less than $4 \times t$ (mm), homogeneous material flow in the thickness direction of the materials to be joined may not be effectively obtained. If D is more than $20 \times t$ (mm), the region where plastic flow occurs is unnecessarily large, resulting in excessive heat input into the joined portion. This may impose an excessive load on the joining apparatus. D is preferably $5 \times t$ (mm) or more, and more preferably $6 \times t$ (mm) or more. D is preferably $15 \times t$ (mm) or less, and more preferably $10 \times t$ (mm) or less.

The base portion of the rotating tool on the side opposite to the leading end only needs to be attachable to a conventionally known friction stir joining apparatus, and the shape of the base portion is not particularly limited.

The shape of the rotating tool other than the above is not particularly limited and may be in accordance with conventional methods.

For example, in the rotating tool illustrated in FIG. 4A, the leading end diameter is 12 mm, the diameter of the probe (hereinafter also referred to as "pin diameter") is 4 mm, the length of the probe (hereinafter also referred to as "pin length") is 0.5 mm, and the concave surface depth is 0.3 mm.

In the rotating tool illustrated in FIG. 4B, the leading end diameter is 20 mm, the pin diameter is 6.7 mm, the pin length is 0.7 mm, and the concave surface depth is 0.3 mm.

In double-sided friction stir welding, a pair of rotating tools having the same shape is usually used.

[2] Friction stir welding

Next, friction stir welding using the rotating tool according to one embodiment of the present disclosure will be described. In friction stir welding, the joint type and joining conditions may be in accordance with conventional methods as long as the rotating tool according to one embodiment of the present disclosure is used.

Preferred examples of the joint type include butt joining as illustrated in FIG. 1 and lap joining as illustrated in FIG. 2.

In butt joining, the end surfaces of the materials to be joined are set facing each other, and a rotating tool is pressed against the butt portion including the end surfaces (butt surfaces) of the materials to be joined while rotating. In this state, the rotating tool is moved in the joining direction to join the materials to be joined.

In lap joining, the ends of the materials to be joined are at least partly overlapped, and a rotating tool is pressed against the overlap portion while rotating. In this state, the rotating tool is moved in the joining direction to join the materials to be joined.

In FIGS. 1 and 2, reference sign 1-1 is a rotating tool (front-side rotating tool), 1-2 is its leading end, 2-1 is a rotating tool (back-side rotating tool), 2-2 is its leading end, 3 is a material to be joined, and 4 is a joined portion.

Butt joining and lap joining are different only in the form of the unjoined portion, and are basically the same in the other parts of the apparatus configuration. Accordingly, an example of butt joining by double-sided friction stir welding as illustrated in FIG. 1 will be described here.

In double-sided friction stir welding, for example, a friction stir welding apparatus is used that includes a pair of rotating tools facing each other, a drive device for the rotating tools, a holding device, and a control device configured to control the operation of the rotating tools. The control device controls, for example, the tilt angle $\alpha$ of each of the rotating tools, the distance G between the leading ends of the rotating tools, the joining speed, and the rotation speed of each of the rotating tools.

As illustrated in FIG. 1, the rotating tools of the friction stir welding apparatus are placed on both sides of the materials to be joined. The rotating tool placed on the front side (the upper side in the vertical direction) of the materials to be joined is also referred to as "front-side rotating tool", and the rotating tool placed on the back side (the lower side in the vertical direction) of the materials to be joined is also referred to as "back-side rotating tool." The materials to be joined are arranged parallel to the joining center line illustrated in the drawing, and are each held by the holding device (not illustrated). Then, the rotating tools are pressed against both sides of the unjoined portion (region to be joined) located on the joining center line, that is, the butt portion between the ends of the materials to be joined, while rotating. The rotating tools are then moved in the joining direction in this state. As a result, the materials to be joined are softened by the frictional heat between the rotating tool and the materials to be joined. The rotating tools then stir the softened part, thereby inducing plastic flow and joining the materials to be joined. A joined portion (butt joint) is formed in the part where the joining is completed.

It is preferable that the rotation direction of the front-side rotating tool and the rotation direction of the back-side rotating tool are opposite when viewed from the front side (or back side) of the materials to be joined. This allows the rotation torques applied to the materials to be joined from the front-side rotating tool and the back-side rotating tool to cancel each other out. As a result, the structure of the jig for holding the materials to be joined can be simplified as compared with single-sided friction stir welding in which the unjoined portion is pressed for joining from one side.

If the rotation direction of the front-side rotating tool and the rotation direction of the back-side rotating tool are the same when viewed from the front side (or back side) of the materials to be joined, the relative speed of one rotating tool with respect to the other rotating tool is close to zero. As a result, the plastic flow of the materials to be joined approaches a homogeneous state, and plastic deformation is reduced. Consequently, heat generation due to plastic deformation of the material is not induced, making it difficult to achieve a good joining state. Therefore, from the viewpoint of obtaining sufficient temperature increase and shear stress homogeneously in the thickness direction of the materials to be joined to achieve a good joining state, it is preferable that the rotation direction of the front-side rotating tool and the rotation direction of the back-side rotating tool are opposite when viewed from the front side (or back side) of the materials to be joined.

In the case of using probe-equipped rotating tools, it is preferable that the tilt angle $\alpha$ of each of the rotating tools satisfies the following relational expression (2):

$$0° < \alpha \leq 3° \qquad \dots (2)$$

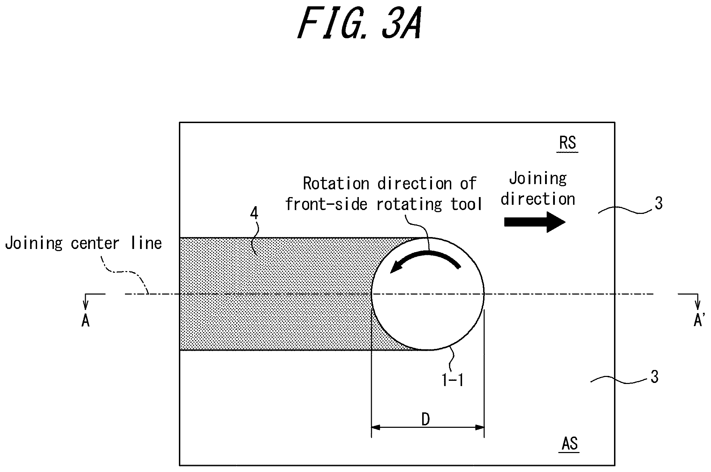

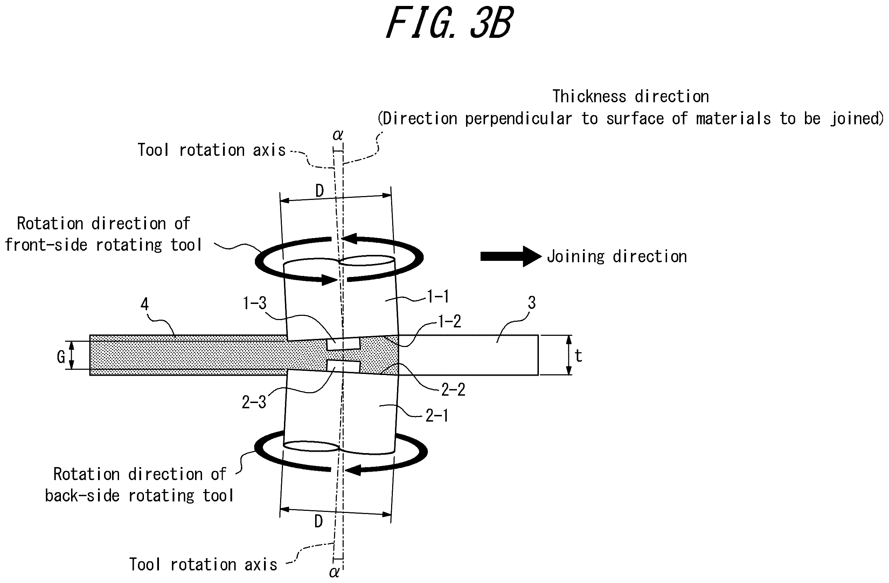

where $\alpha$ is the tilt angle of the rotation axis of the rotating tool (hereinafter also referred to as "tool rotation axis") from the thickness direction of the materials to be joined (direction perpendicular to the surface of the materials to be joined) in a plane including the joining direction and the thickness direction (direction perpendicular to the surface of the materials to be joined), as illustrated in FIG. 3B. Moreover, the direction (angle) in which the leading end of the rotating tool leads (i.e. is positioned ahead) in the joining direction is defined as +. FIG. 3A is a top view illustrating an example of butt joining by double-sided friction stir welding, that is, a view from the upper side in the vertical direction where the front-side rotating tool is located, illustrating the state during double-sided friction stir welding. FIG. 3B is a sectional view taken along line A-A' in FIG. 3A. In FIGS. 3A and 3B, reference sign 1-1 is a rotating tool (front-side rotating tool), 1-2 is its leading end, 1-3 is its probe, 2-1 is a rotating tool (back-side rotating tool), 2-2 is its leading end, 2-3 is its probe, 3 is a material to be joined, and 4 is a joined portion.

The rotating tool is typically made of a material harder than the materials to be joined. If a bending force is applied to the probe, stress concentrates locally, which may lead to damage. By tilting the tool rotation axis from the thickness direction of the materials to be joined so that the leading end of the probe will lead in the joining direction, the load on the rotating tool can be received by the rotating tool as a compressive force in the direction of the rotation axis, with it being possible to reduce the bending force. This improves the durability of the rotating tool.

If the tilt angle $\alpha$ of the rotating tool is more than 0°, the foregoing effect is achieved. If the tilt angle $\alpha$ of the rotating tool is more than 3°, however, the front and back surfaces of the joined portion may become concave, which adversely affects the joint strength. Therefore, it is preferable that $0° < \alpha \le 3°$ for both the front-side rotating tool and the back-side rotating tool.

In the case of using probe-less rotating tools, it is preferable that $\alpha$ satisfies the following relational expression (3):

$$0° \le \alpha \le 3° \qquad \dots (3).$$

In detail, in the case of using probe-less rotating tools, there is no need to consider reducing the load of the bending force on the probe. Hence, even if joining is performed with the tool rotation axis parallel to the thickness direction of the materials to be joined, that is, $\alpha = 0°$, the durability of the rotating tool is not particularly affected. However, if the tilt angle $\alpha$ of the rotating tool is more than 3°, the front and back surfaces of the joined portion may become concave, which adversely affects the joint strength, as mentioned above. Therefore, it is preferable that $0° \le \alpha \le 3°$ for both the front-side rotating tool and the back-side rotating tool.

It is also preferable that the separation distance G between the leading ends of the rotating tools satisfies the following relational expression (4):

$$0.25 \times t - 0.2 \times D \times \sin\alpha \le G \le 0.8 \times t - 0.2 \times D \times \sin\alpha \qquad \dots (4)$$

where G is the distance (shortest distance) between the shoulder portion of the front-side rotating tool and the shoulder portion of the back-side rotating tool in the thickness direction of the materials to be joined, as illustrated in FIG. 3B. The definitions of t, D, and $\alpha$ are as described above.

In double-sided friction stir welding, it is advantageous to appropriately control the separation distance between the leading ends of the rotating tools from the viewpoint of homogenizing the sufficient temperature increase and shear stress applied during joining in the thickness direction of the materials to be joined. It is therefore preferable that G satisfies the above relational expression (4). In the case where $\alpha = 0°$, i.e. in the case where the tool rotation axis is not tilted from the thickness direction of the materials to be joined, it is preferable to control G within the range of $0.25 \times t$ to $0.8 \times t$. In the case where the tool rotation axis is tilted from the thickness direction of the materials to be joined, it is preferable to satisfy the above relational expression (4) depending on $\alpha$ and D.

As a result of satisfying the above relational expression (4) for G, the leading ends of the front-side and back-side rotating tools facing each other press the materials to be joined with sufficient load, thereby promoting heat generation and material flow sufficiently. Thus, homogeneous material flow in the thickness direction of the materials to be joined is promoted, and a good joined portion is obtained. If G is more than $0.8 \times t - 0.2 \times D \times \sin\alpha$, the load with which the leading ends of the front-side and back-side rotating tools press the materials to be joined may be insufficient, making it impossible to achieve the foregoing effect. If G is less than $0.25 \times t - 0.2 \times D \times \sin\alpha$, the front and back surfaces of the joined portion may become concave, which adversely affects the joint strength.

Conditions other than the above may be in accordance with conventional methods. For example, the rotation speed of each of the rotating tools is preferably 100 r/min to 5000 r/min. Limiting the rotation speed of the rotating tool to this range is advantageous in that the decrease in mechanical properties caused by excessive heat input can be suppressed while maintaining a good surface shape of the joined portion. The rotation speed of the rotating tool is more preferably 500 r/min or more. The rotation speed of the rotating tool is more preferably 3000 r/min or less.

The joining speed is preferably 1000 mm/min or more and more preferably 2000 mm/min or more, from the viewpoint of improving work efficiency.

[3] Materials to be joined

The materials to be joined are not particularly limited. Examples of the materials to be joined are high-melting-point alloys such as steel sheets. Specific steel types include typical structural steels and carbon steels, such as rolled steels for welded structure defined in JIS G 3106 (2020) and carbon steels for machine structural use defined in JIS G 4051 (2016). High-strength structural steels having a tensile strength of 800 MPa or more can also be advantageously used as materials to be joined. In this case as well, a joined portion with a tensile strength of 85 % or more of that of the steel material used as the materials to be joined can be obtained. The tensile strength of the joined portion is preferably 90 % or more and further preferably 95 % or more of that of the steel material used as the materials to be joined.

EXAMPLES

The functions and effects according to the present disclosure will be described by way of examples. The present disclosure is not limited to the following examples.

Steel sheets with the sheet thickness, chemical composition (the balance consisting of Fe and inevitable impurities), and tensile strength shown in Table 1 were butted together as materials to be joined, and double-sided friction stir welding was carried out using a pair of rotating tools shown in Table 2 under the following conditions (the same conditions for both the front-side and back-side rotating tools) to obtain a welded joint:

$\alpha$: 0°
G: 0.80 mm
Rotation speed of rotating tool: 1500 r/min
Joining speed: 3000 mm/min
Joining length: 0.5 m.

In butt joining, the groove was a so-called I-type groove with no groove angle to the ends of the two steel sheets as the materials to be joined, and the two steel sheets were butted and joined with a surface state equivalent to that of milling.

The front-side rotating tool placed on the upper side in the vertical direction was rotated clockwise when viewed from above, and the back-side rotating tool placed on the lower side in the vertical direction was rotated counterclockwise when viewed from above. In other words, each of the rotating tools was rotated counterclockwise when its leading end was viewed from the front. The front-side rotating tool and the back-side rotating tool were the same in cross-sectional dimensions and shape. Conditions not specified were set in accordance with conventional methods.

Next, the obtained welded joints were evaluated for (I) surface defects and (II) internal defects, as described below.

(I) Surface defects

The presence of surface defects was determined by visual observation, particularly to check for recesses (concavity) formed due to gouging of the surface of the joined portion (hereinafter also referred to as "recesses"). In the case where any recess was found, its depth $D_d$ (mm) was measured using a laser displacement meter. The presence of surface defects and their significance were determined according to the following criteria. The evaluation results are shown in Table 2. The observation was conducted on a steady-state region, i.e. a region where joining was performed in a state in which the joining speed reached 3000 mm/min.

<Criteria>

- No defects (pass, excellent): No recesses are observed.
- Minor defects (pass): Recesses are observed, but $D_d/t$ of the recesses is 0.1 or less.
- Significant defects (fail): Recesses with $D_d/t$ of more than 0.1 (including a groove-like unjoined state penetrating from the front to the back of the joined portion) are observed.

(If an unjoined state penetrating from the front to the back of the joined portion was observed, the following evaluations were omitted on the assumption that the joining failed.)

(II) Internal defects

The welded joint was cut in the thickness (vertical) direction so that the observation plane would include the perpendicular-to-joining direction and the thickness direction, to collect three specimens. The cut positions (observation planes) in the joining direction were: 20 mm from the end of the steady-state region on the joining start side; 20 mm from the end of the steady-state region on the joining end side; and the midpoint of the steady-state region, and the specimens were taken so that the cut surfaces at the cutting positions would be the observation planes. The observation plane of each of the obtained specimens was then observed with an optical microscope (magnification: 10 times). The presence of internal defects and their significance were determined according to the following criteria.

<Criteria>

- No defects (pass, excellent): No tunnel-shaped unjoined state is observed in any of the three specimens.
- Minor defects (pass): A tunnel-shaped unjoined state is observed in one of the three specimens.
- Significant defects (fail): A tunnel-shaped unjoined state is observed in two or more of the three specimens.

Additionally, a No.1 specimen as defined in JIS Z 3121 (2013) was extracted from the welded joint and subjected to a tensile test in accordance with JIS Z 3121 (2013) to measure the tensile strength. The measurement results are shown in Table 2.

(III) Durability of rotating tools

Further, the durability of the rotating tools was evaluated as follows.
When rotating tools are damaged or worn, a joining failure due to internal defects is highly likely to occur. In view of this, joining was repeatedly performed with a joining length of 0.5 m under the same conditions as above, and whether the resulting welded joints had internal defects was determined by the determination method described in "(II) Internal defects" above.
The durability of the rotating tools was evaluated according to the following criteria based on the maximum number of welded joints at which 90 % or more of the total number of welded joints are determined to have no internal defects (hereinafter also referred to as "90 % maintained maximum joint number"). The evaluation results are shown in Table 2.

- Good (pass, particularly excellent): The 90 % maintained maximum joint number is 200 or more.
- Poor (fail): The 90 % maintained maximum joint number is less than 200.

Here, the 90 % maintained maximum joint number is the maximum value of N that satisfies the following expression (a), where N is the number of welded joints obtained in the order of joining and inspected for the presence of internal defects.

[Number of welded joints determined to have no internal defects among the welded joints inspected for the presence of internal defects]/[Number of welded joints inspected for the presence of internal defects] $\times$ 100 $\geq$ 90    expression (a)

For example, suppose the welded joints obtained from the 1st to 4th joining operations are determined to have no internal defects, and the welded joint obtained from the 5th joining operation is determined to have internal defects.
When N = 4, [Total number of welded joints having no internal defects among the welded joints inspected for the presence of internal defects]/[Number N of welded joints inspected for the presence of internal defects] $\times$ 100 = 4/4 $\times$ 100 = 100 $\geq$ 90.

When N = 5, [Total number of welded joints having no internal defects among the welded joints inspected for the presence of internal defects]/[Number N of welded joints inspected for the presence of internal defects] $\times$ 100 = 4/5 $\times$ 100 = 80 < 90.

In this case, expression (a) is satisfied up to N = 4 but is no longer satisfied when N = 5, so that the 90 % maintained maximum joint number is 4.
For example, suppose the welded joints obtained from the 1st to 10th and 12th to 19th joining operations are determined to have no internal defects, and the welded joints obtained from the 11th, 20th, and 21st joining operations are determined to have internal defects.

When N = 11, [Total number of welded joints having no internal defects among the welded joints inspected for the presence of internal defects]/[Number N of welded joints inspected for the presence of internal defects] $\times$ 100 = 10/11 $\times$ 100 $\approx$ 90.9 $\geq$ 90.

When N = 20, [Total number of welded joints having no internal defects among the welded joints inspected for the presence of internal defects]/[Number N of welded joints inspected for the presence of internal defects] $\times$ 100 = 18/20 $\times$ 100 = 90 $\geq$ 90.

When N = 21, [Total number of welded joints having no internal defects among the welded joints inspected for the presence of internal defects]/[Number N of welded joints inspected for the presence of internal defects] $\times$ 100 = 18/21 $\times$ 100 = 85.7 < 90.

In this case, expression (a) is satisfied up to N = 20 but is no longer satisfied when N = 21, so that the 90 % maintained maximum joint number is 20.

[Table 1]

Table 1

| Sample ID | Sheet thickness (mm) | Chemical composition (mass%) | | | | | Tensile strength (MPa) |
|---|---|---|---|---|---|---|---|
| | | C | Si | Mn | P | S | |
| 1 | 1.6 | 0.1 | 1.5 | 1.5 | 0.02 | 0.002 | 632 |
| 2 | 1.6 | 0.3 | 0.2 | 0.7 | 0.012 | 0.003 | 1010 |

[Table 2]

Table 2

| | Materials to be joined | t (mm) | Joint type | Rotating tools | | | | | | | | | Evaluation results | | | | |
|---|---|---|---|---|---|---|---|---|---|---|---|---|---|---|---|---|---|
| | | | | Leading end | | | Shape | | | | | (I) Surface defects | (II) Internal defects | Tensile strength of joined portion (MPa) | (III) Durability of rotating tools | | |
| | | | | Material type | Coefficient of kinetic friction | Vickers hardness (HV) | Shape | D (mm) | Convex surface height (mm) | Concave surface depth (mm) | Step portion | | | | | 90% maintained maximum joint number | Determination |
| Example 1 | 1 | 1.6 | Butt | PCBN | 0.15 | 3000 | FIG. 6A | 12 | 0.5 | - | - | No defects | No defects | 625 | 320 | Good |
| Example 2 | 1 | 1.6 | Butt | PCBN | 0.15 | 3000 | FIG. 6B | 12 | 0.5 | - | Stepped | No defects | No defects | 629 | 331 | Good |
| Example 3 | 1 | 1.6 | Butt | PCBN | 0.15 | 3000 | FIG. 4A | 12 | - | 0.3 | - | No defects | No defects | 627 | 285 | Good |
| Example 4 | 2 | 1.6 | Butt | PCBN | 0.15 | 3000 | FIG. 6A | 12 | 0.5 | - | - | No defects | No defects | 1010 | 253 | Good |
| Example 5 | 1 | 1.6 | Butt | PCBN | 0.12 | 3300 | FIG. 6A | 12 | 0.5 | - | - | No defects | No defects | 630 | 353 | Good |
| Example 6 | 1 | 1.6 | Butt | PCBN | 0.12 | 3300 | FIG. 6B | 12 | 0.5 | - | Stepped | No defects | No defects | 629 | 358 | Good |
| Example 7 | 2 | 1.6 | Butt | PCBN | 0.12 | 3300 | FIG. 6A | 12 | 0.5 | - | - | No defects | No defects | 1009 | 314 | Good |
| Example 8 | 1 | 1.6 | Butt | PCBN | 0.23 | 2600 | FIG. 6A | 12 | 0.5 | - | - | No defects | No defects | 628 | 254 | Good |
| Example 9 | 1 | 1.6 | Butt | PCBN | 0.23 | 2600 | FIG. 6B | 12 | 0.5 | - | Stepped | No defects | No defects | 628 | 249 | Good |
| Example 10 | 2 | 1.6 | Butt | PCBN | 0.23 | 2600 | FIG. 6A | 12 | 0.5 | - | - | No defects | No defects | 1009 | 227 | Good |
| Comparative Example 1 | 1 | 1.6 | Butt | $Si_3N_4$ | 0.37 | 1600 | FIG. 6A | 12 | 0.5 | - | - | No defects | No defects | 629 | 42 | Poor |
| Comparative Example 2 | 1 | 1.6 | Butt | $Si_3N_4$ | 0.37 | 1600 | FIG. 6B | 12 | 0.5 | - | Stepped | No defects | No defects | 628 | 39 | Poor |

12

(continued)

| | Materials to be joined | t (mm) | Joint type | Rotating tools | | | | | | | | | | Evaluation results | | | | |
|---|---|---|---|---|---|---|---|---|---|---|---|---|---|---|---|---|---|---|
| | | | | Leading end | | | Shape | | | | | | | (I) Surface defects | (II) Internal defects | Tensile strength of joined portion (MPa) | (III) Durability of rotating tools | | Determination |
| | | | | Material type | Coefficient of kinetic friction | Vickers hardness (HV) | Shape | D (mm) | Convex surface height (mm) | Concave surface depth (mm) | Step portion | | | | | | 90% maintained maximum joint number | |
| Comparative Example 3 | 2 | 1.6 | Butt | Si$_3$N$_4$ | 0.37 | 1600 | FIG. 6A | 12 | 0.5 | - | - | | | No defects | No defects | 1010 | 25 | Poor |
| Comparative Example 4 | 1 | 1.6 | Butt | WC | 0.20 | 1090 | FIG. 6A | 12 | 0.5 | - | - | | | No defects | No defects | 631 | 15 | Poor |
| Comparative Example 5 | 1 | 1.6 | Butt | WC | 0.20 | 1090 | FIG. 6B | 12 | 0.5 | - | Stepped | | | No defects | No defects | 627 | 14 | Poor |
| Comparative Example 6 | 1 | 1.6 | Butt | WC | 0.20 | 1920 | FIG. 4A | 12 | - | 0.3 | - | | | No defects | No defects | 624 | 13 | Poor |
| Comparative Example 7 | 2 | 1.6 | Butt | WC | 0.20 | 1090 | FIG. 6A | 12 | 0.5 | - | - | | | No defects | No defects | 1008 | 9 | Poor |
| Comparative Example 8 | 1 | 1.6 | Butt | Nickel-based alloy | 0.45 | 550 | FIG. 6A | 12 | 0.5 | - | - | | | Significant defects | No defects | 552 | 5 | Poor |
| Comparative Example 9 | 1 | 1.6 | Butt | Nickel-based alloy | 0.45 | 550 | FIG. 6B | 12 | 0.5 | - | Stepped | | | Significant defects | No defects | 559 | 4 | Poor |
| Comparative Example 10 | 2 | 1.6 | Butt | Nickel-based alloy | 0.45 | 550 | FIG. 6A | 12 | 0.5 | - | - | | | Significant defects | No defects | 995 | 3 | Poor |
| Comparative Example 11 | 1 | 1.6 | Butt | PCBN | 0.35 | 2400 | FIG. 6A | 12 | 0.5 | - | - | | | No defects | No defects | 625 | 178 | Poor |
| Comparative Example 12 | 1 | 1.6 | Butt | PCBN | 0.35 | 2400 | FIG. 6B | 12 | 0.5 | - | Stepped | | | No defects | No defects | 628 | 184 | Poor |
| Comparative Example 13 | 1 | 1.6 | Butt | PCBN | 0.35 | 2400 | FIG. 6A | 12 | 0.5 | - | - | | | No defects | No defects | 1010 | 163 | Poor |
| Comparative Example 14 | 1 | 1.6 | Butt | PCBN | 0.30 | 2500 | FIG. 6A | 12 | 0.5 | - | - | | | No defects | No defects | 628 | 195 | Poor |

| | Materials to be joined | t (mm) | Joint type | Rotating tools | | | | | | | | | | Evaluation results | | | | |
|---|---|---|---|---|---|---|---|---|---|---|---|---|---|---|---|---|---|---|
| | | | | Leading end | | | Shape | | | | | (I) Surface defects | (II) Internal defects | Tensile strength of joined portion (MPa) | (III) Durability of rotating tools | | |
| | | | | Material type | Coefficient of kinetic friction | Vickers hardness (HV) | Shape | D (mm) | Convex surface height (mm) | Concave surface depth (mm) | Step portion | | | | | 90% maintained maximum joint number | Determination |
| Comparative Example 15 | 1 | 1.6 | Butt | PCBN | 0.30 | 2500 | FIG. 6B | 12 | 0.5 | - | Stepped | No defects | No defects | 625 | 191 | Poor |
| Comparative Example 16 | 2 | 1.6 | Butt | PCBN | 0.30 | 2500 | FIG. 6A | 12 | 0.5 | - | - | No defects | No defects | 1009 | 181 | Poor |

As shown in Table 2, in all Examples, even with a high joining speed of 3000 mm/min and a high tool rotation speed of 1500 r/min, defect formation during joining was suppressed. The durability of the rotating tools was also excellent. Moreover, in all Examples, the tensile strength of the joined portion was 95 % or more of the tensile strength of the materials to be joined, demonstrating sufficient joint strength.

In all Comparative Examples, the durability of the rotating tools was insufficient. Further, in Comparative Examples 6 and 7, significant surface defects were observed.

In the case where double-sided friction stir welding was performed for various joining conditions and various materials to be joined using the rotating tools of Examples with the joint type being butt joint or lap joint, too, suppression of defect formation during joining, increased joining speed, and improved rotating tool durability were simultaneously achieved as in the above case. In addition, sufficient joint strength was obtained at the joined portion.

REFERENCE SIGNS LIST

1-1   rotating tool (front-side rotating tool)
1-2   leading end
1-3   probe
2-1   rotating tool (back-side rotating tool)
2-2   leading end
2-3   probe
3      material to be joined
4      joined portion

**Claims**

1. A rotating tool for double-sided friction stir welding,
   wherein a leading end of the rotating tool consists of a material having a coefficient of kinetic friction of less than 0.30 and a Vickers hardness of 2500 HV or more.

2. The rotating tool for double-sided friction stir welding according to claim 1, being a probe-less rotating tool,
   wherein a leading end face of the rotating tool is a flat surface, a convex curved surface, or a concave curved surface.

3. The rotating tool for double-sided friction stir welding according to claim 2, wherein the leading end face of the rotating tool has a spiral-shaped step portion spiraling opposite to a rotation direction of the rotating tool.

4. The rotating tool for double-sided friction stir welding according to any of claims 1 to 3, wherein the following relational expression (1) is satisfied:

$$4 \times t \le D \le 20 \times t \qquad \dots (1)$$

   where t is a thickness of materials to be joined in mm, and D is a diameter of the leading end of the rotating tool in mm.

# FIG. 1

Tool rotation axis

Thickness direction
(Direction perpendicular to
surface of materials to be joined)

Rotation direction of
front-side rotating tool

Joining direction

Joining
center line

4

1-1
1-2

3

2-2
2-1

3

Tool rotation axis

Rotation direction of
back-side rotating tool

Thickness
direction   Perpendicular-to-
            joining direction

Joining direction

EP 4 644 031 A1

FIG. 2

# FIG. 3A

Rotation direction of
front-side rotating tool

Joining
direction

RS

4

Joining center line

A

A'

1-1

D

AS

3

3

EP 4 644 031 A1

# FIG. 3B

EP 4 644 031 A1

# FIG. 4A

D

Pin diameter

Pin length

Concave surface depth

Rotation direction

# FIG. 4B

Pin length

Pin diameter

D

Concave surface depth

Rotation direction

# FIG. 5A

# FIG. 5B

D

Rotation direction

# FIG. 6A

D

Convex surface height

Rotation direction

# FIG. 6B

D

Convex surface height

Rotation direction

FIG. 7A

D

Concave surface depth

Rotation direction

## FIG. 7B

D

Concave surface depth

Rotation direction

# FIG. 8A

Rotation direction

# FIG. 8B

Rotation direction

## INTERNATIONAL SEARCH REPORT

| International application No. |
| --- |
| **PCT/JP2024/006355** |

| A. | CLASSIFICATION OF SUBJECT MATTER |
| --- | --- |

***B23K 20/12***(2006.01)i
FI:   B23K20/12 344

According to International Patent Classification (IPC) or to both national classification and IPC

| B. | FIELDS SEARCHED |
| --- | --- |

Minimum documentation searched (classification system followed by classification symbols)

B23K20/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2012-040583 A (OSAKA UNIVERSITY) 01 March 2012 (2012-03-01) | 1-2 |
| | paragraphs [0035], [0043]-[0050], fig. 4 | |
| Y | | 1-4 |
| Y | WO 2021/060176 A1 (JFE STEEL CORPORATION) 01 April 2021 (2021-04-01) | 1-4 |
| | paragraphs [0050]-[0056], fig. 1-3, 5-7 | |
| Y | JP 2012-192437 A (MITSUBISHI HEAVY INDUSTRIES, LTD.) 11 October 2012 (2012-10-11) | 1-4 |
| | paragraph [0024] | |
| A | JP 2014-172072 A (JAPAN SCIENCE AND TECHNOLOGY AGENCY) 22 September 2014 (2014-09-22) | 1-4 |
| | entire text, all drawings | |
| A | JP 7231130 B1 (JFE STEEL CORPORATION) 01 March 2023 (2023-03-01) | 1-4 |
| | entire text, all drawings | |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 April 2024** | **14 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/006355**

| Patent document cited in search report | | | Publication date (day/month/year) | Patent family member(s) | Publication date (day/month/year) |
|---|---|---|---|---|---|
| JP | 2012-040583 | A | 01 March 2012 | (Family: none) | |
| WO | 2021/060176 | A1 | 01 April 2021 | US 2022/0371119 A1 paragraphs [0096]-[0105], fig. 1-3, 5-7 KR 10-2022-0047652 A CN 114423561 A | |
| JP | 2012-192437 | A | 11 October 2012 | (Family: none) | |
| JP | 2014-172072 | A | 22 September 2014 | (Family: none) | |
| JP | 7231130 | B1 | 01 March 2023 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S62183979 A
- JP H07505090 A
- JP 3261433 B
- JP 4838385 B
- JP 4838388 B
- JP 6825630 B
- JP 6737347 B
- JP 4827359 B
- JP 2007237258 A
- JP 5971616 B

- JP 6491363 B
- JP 5156948 B
- WO 2018030309 A1
- JP 5185103 B
- JP 2015127063 A
- JP 2003181655 A
- JP 2003290936 A
- JP 2004195480 A
- JP 2011115846 A